# EUROPEAN PATENT SPECIFICATION

(11) **EP 3 482 832 B1**
(45) Date of publication and mention of the grant of the patent: **22.12.2021**
(21) Application number: 17841269.8
(22) Date of filing: 01.06.2017
(51) Int. Cl.: B05B 1/10, B05B 1/14, B60S 1/52, B05B 15/40

(54) **FLUID APPARATUS AND NOZZLE**
FLUIDVORRICHTUNG UND DÜSE
APPAREIL À FLUIDE ET BUSE

(30) Priority: 15.08.2016 JP 2016159153
(43) Date of publication of application: 15.05.2019
(73) Proprietor: Nippon Vinylon Co., Ltd., Hamamatsu-shi, Shizuoka 431-2103 (JP)
(72) Inventor: MOTOJIMA, Yusuke, Hamamatsu-shi, Shizuoka 431-2103 (JP); YAMAGUCHI, Takahiro, Hamamatsu-shi, Shizuoka 431-2103 (JP)
(74) Representative: Vossius & Partner Patentanwälte Rechtsanwälte mbB
(86) International application number: PCT/JP2017/020438
(87) International publication number: WO 2018/034041

(56) References cited:
- WO-A1-2011/148865
- GB-A- 2 200 056
- JP-A- H04 298 257
- JP-A- 2002 224 590
- JP-A- 2004 298 778
- JP-A- 2013 121 589
- KR-A- 20040 013 952
- US-A- 3 273 805
- US-A- 3 486 700
- US-B2- 7 841 548

## Description

### TECHNICAL FIELD

The present invention is related to a nozzle for injecting fluid.

### BACKGROUND ART

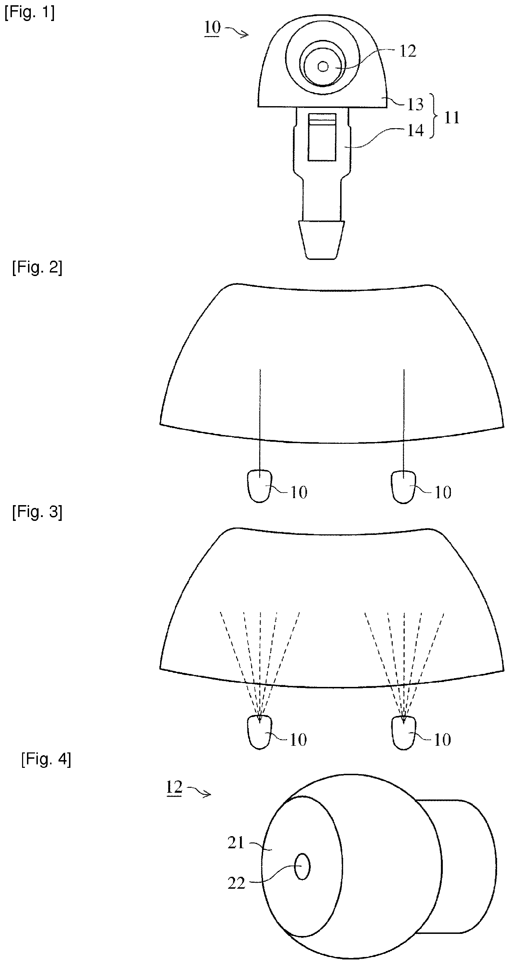

FIG. 1 illustrates a nozzle 10 such as a washer nozzle, including a body 11 and a fluid device 12.

The body 11 has a neck section 14. The neck section 14 is configured to be connected to a supply source, such as washer tank and a pump, of fluid such as a washer liquid. The neck section 14 has a duct, not shown, inside.

The body 11 also has a head section 13. The head section 13 has a accommodation section, not shown, inside. The accommodation section is a hallow with a roughly spherical shape, for example, which is configured to fit with the fluid device 12.

The fluid device 12 is configured to inject fluid, which is supplied via the duct of the neck section 14, toward a windshield of an automobile or the like, as shown in FIG. 2 or 3.

### <Conventional Example 1>

FIGS. 4 to 6 illustrate a fluid device 12, for use in the nozzle 10 shown in FIG. 1 or the like.

The fluid device 12 includes a supply face 21, a injection face 23, and fluid path 25.

The fluid path 25 is a hole with a roughly constant thickness, communicating a supply port 22 provided on the supply face 21 and a injection port 24 provided on the injection face 23.

Fluid is supplied to the supply port 22 passes through the fluid path 25, and is injected outward from the injection port 24.

However, when a foreign object is contaminated in the fluid, the foreign object may choke and block the supply port 22. This results in loss of capability of the fluid device 12 to inject fluid.

### <Conventional Example 2>

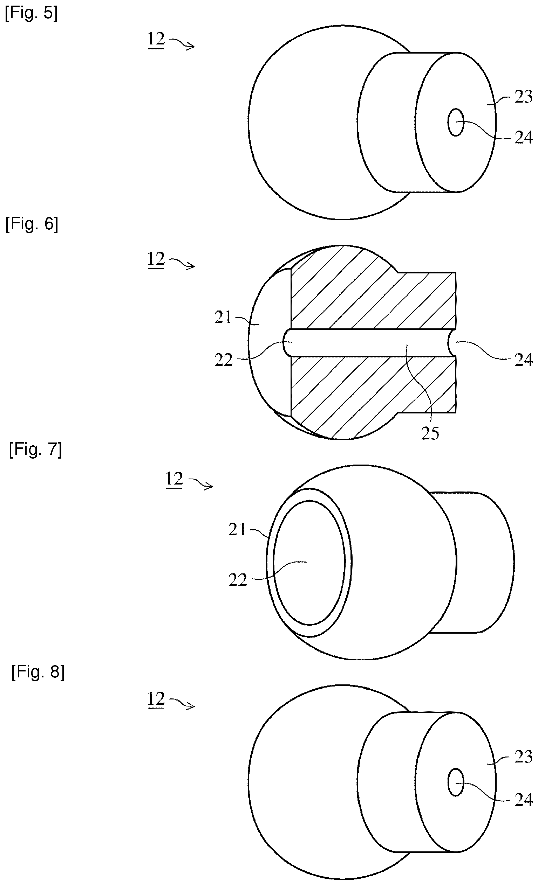

FIGS. 7 to 9 illustrate a fluid device 12 for use in the nozzle 10 shown in FIG. 1 or the like.

The fluid device 12 is similar to, but different in the following points from, Conventional Example 1.

The fluid device 12 has an upstream path 26 and a downstream path 27, which replace the fluid path 25.

The upstream path 26 and the downstream path 27 are holes with a roughly constant thickness, and connected with one another via a connection port 28. The upstream path 26 is thicker thant the downstream path 27, and communicates the supply port 22 provided on a supply face 21 and the connection port 28. The downstream path 27 communicates the connection port 28 and a injection port 24 provided on a injection face 23.

Fluid is supplied to the supply port 22, passes through the upstream path 26, the connection port 28, and the downstream path 27, and is injected outward from the injection port 24.

In contrast to the conventional example 1, the supply port 22 is larger, and this prevent a foreign object from choking the supply port 22. However, the foreign object may choke and block the connection port 28. This results in loss of capability of the fluid device 12 to inject fluid.

### <Conventional Example 3>

JP 2002-331918 A discloses a washer nozzle, or a nozzle, including a filter section, for preventing pass of a foreign object choking a nozzle jet, or a fluid device, provided on a head section of a body. However, a shape of the body depends on an object and/or location for mounting the nozzle.

This may prevent a filter section being provided on the body, or require large design change to provide a filter section on the body.

### <Further Conventional Examples>

GB 2 200 056 A discloses a flow restrictor. US 3 273 805 discloses a pressurized fluid nozzle. KR 2004 0013952 A discloses an injection nozzle.

### SUMMARY OF INVENTION

The invention for which protection is sought is defined by the claims.

### Technical Problem

The present invention aims to solve the above described problems or the like, to prevent choking of the fluid device and to enable injection of fluid, with no filter section provided on the body.

### Solution to Problem

A fluid device according to claim 1.

The connection port may be a gap between the plurality of the partition walls.

The upstream path may have a first, a second, and a third fluid paths. The downstream path may have a first and a second fluid paths. The first fluid path of the upstream path may be connected via a first connection port to the first fluid path of the downstream path. The second fluid path of the upstream path may be connected via a second connection port to the second fluid path of the downstream path. The third fluid path of the upstream path may be connected via a third connection port to the first fluid path of the downstream path, and connected via a fourth connection port to the second fluid path of the downstream path.

The first fluid path of the downstream path may inject the supplied fluid toward a first direction. The second fluid path of the downstream path may inject the supplied fluid toward a second direction different from the first direction.

A nozzle may includes the fluid device, and a body. The body may have a accommodation section fitted with the fluid device.

### Advantageous Effects of the Invention

According to the present invention, the connection port with a slit shape extending along the flowing direction of the fluid enables to prevent a foreign object from blocking the connection port. This enables to prevent loss of capability to inject fluid.

The connection port having a width narrower than the downstream path enables to prevent the foreign object passing through the connection port from choking the downstream path. This enables to prevent loss of capability to inject fluid.

The upstream path having a plurality of fluid paths, each of which being connected via a connection port to the downstream path, enables to supply fluid through other of the connection ports to the downstream path, even when a foreign object blocks one of the connection ports. This enables to prevent loss of capability to inject fluid.

### BRIEF DESCRIPTION OF DRAWINGS

- FIG. 1: shows a front view of a nozzle;

- FIG. 2: shows fluid injected by the nozzle;
- FIG. 3: shows fluid injected by the nozzle;
- FIG. 4: shows a perspective view of a conventional fluid device;
- FIG. 5: shows a perspective view of a conventional fluid device;
- FIG. 6: shows a perspective sectional view of a conventional fluid device;
- FIG. 7: shows a perspective view of a conventional fluid device;
- FIG. 8: shows a perspective view of a conventional fluid device;
- FIG. 9: shows a perspective sectional view of a conventional fluid device;
- FIG. 10: shows a perspective view of a fluid device;
- FIG. 11: shows a perspective view of a fluid device;
- FIG. 12: shows a perspective sectional view of a fluid device;
- FIG. 13: shows a perspective view of a fluid device;
- FIG. 14: shows a perspective view of a fluid device;
- FIG. 15: shows an exploded perspective sectional view of a fluid device;
- FIG. 16: shows a perspective view of a fluid device not being part of the invention;
- FIG. 17: shows a perspective sectional view of a fluid device not being part of the invention;

- FIG. 18: shows a perspective view of a fluid device;
- FIG. 19: shows a perspective sectional view of a fluid device;
- FIG. 20: shows a perspective view of a fluid device; and
- FIG. 21: shows a perspective sectional view of a fluid device.

### DESCRIPTION OF EMBODIMENT

### <Embodiment 1>

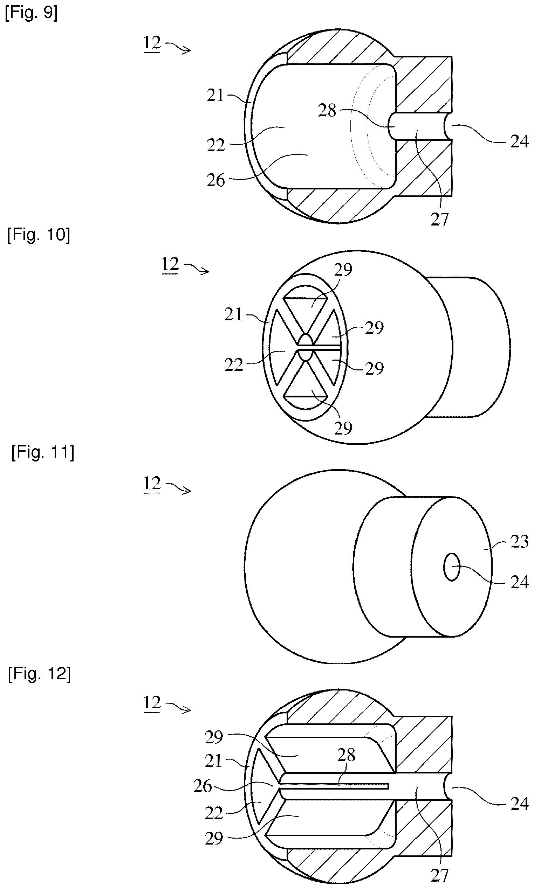

FIGS. 10 to 12 illustrate a fluid device 12, also called a nozzle part, for use in a nozzle 10 such as a washer nozzle shown in FIG. 1 or the like.

The fluid device 12 includes a supply face 21, an injection face 23, an upstream path 26, a downstream path 27, and partition walls 29.

The supply face 21 is located at an upstream side, and have a supply port 22. The supply port 22 receives a supply of fluid. The supply port 22 is divided by the partition walls 29 into five areas. One of them is a central area, and the other four are peripheral areas. The central area is linked to all of the peripheral areas. Each of the peripheral areas is broader than the central area.

The injection face 23 is located at a downstream side, and have an injection port 24. The injection port 24 injects fluid outward.

The downstream path 27, also called an injection fluid path or a main fluid path, is a hole with a roughly constant thickness, and communicates the central area of the supply port 22 and the injection port 24.

The upstream path 26, also called an dust-proof fluid path or an auxiliary fluid path, is a hole with a roughly constant thickness, and surrounds an upstream side part of the downstream path 27. The upstream path 26 is divided by the partition walls 29 into four fluid paths. Each of the fluid paths is connected via a connection port 28, also called a communication section, to the downstream path 27. Each of the fluid paths communicates the peripheral area of the supply port 22 and the connection port 28.

The partition walls 29 surround the upstream side part of the downstream path 27, extend along a flowing direction of the fluid, and extend radially around the downstream path 27. Between adjoining partition walls 29 are gaps with slit shapes extending along the flowing direction of the fluid, near the center. The gaps function as the connection ports 28. Widths of the gaps are narrower than a diameter of the downstream path 27. The widths of the gaps may be different from one another.

Fluid is supplied to the supply port 22. A part of the fluid enters the downstream path 27 directly through the central area, and the rest enters the upstream path 26 through the peripheral area. The fluid entering the upstream path 26 then enters the downstream path 27 through the connection port 28. The fluid entering the downstream path 27 is injected outward from the injection port 24.

When a foreign object is contaminated in the fluid, the foreign object may choke and block the central area of the supply port 22.

In contrast, the peripheral areas of the supply port 22 is broader than the central area, and this allows the foreign object to intrude into the upstream path 26 without choking the peripheral area.

The foreign object intruding into the upstream path 26 may choke the connection port 28. However, the connection port 28 having a slit shape extending along the flowing direction of the fluid prevents the connection port 28 from being completely blocked. This enables to prevent loss of capability to inject fluid.

The connection port 28 extending along the flowing direction of the fluid enables to increase its sectional area, in contrast to one facing the flowing direction of the fluid. This enable to prevent the connection port 28 from being completely blocked, even when the foreign object is piled at the connection port 28.

Even if one of the connection ports 28 is completely blocked, the other of the connection ports 28 enables to supply fluid through them to the downstream path 27. This enables to prevent loss of capability to inject fluid.

A foreign object small enough to pass through the central area of the supply port 22 and/or the connection port 28 is emitted outward from the injection port 24, without choking the downstream path 27. This enables to prevent loss of capability to inject fluid.

The fluid device alone prevents choking. This enables it to use combined with a body 11 having no filter section.

The body 11 may be provided with a filter section for preventing pass of a foreign object large enough to block the peripheral area of the supply port 22.

### <Embodiment 2>

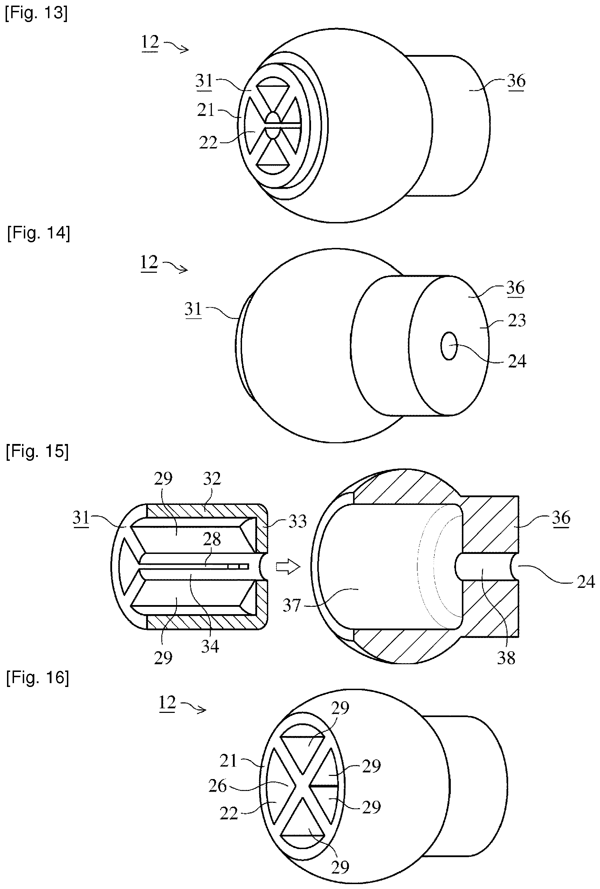

FIGS. 13 to 15 illustrate a fluid device 12 for use in a nozzle 10 shown in FIG. 1 or the like.

The fluid device 12 is similar to, but different in the following points from, Embodiment 1.

The fluid device 12 is formed by fitting an inner part 31 into an outer part 36.

The outer part 36, also called an appearance part, has an injection face 23, an accommodation space 37, and a fluid path 38.

The injection face 23 has an injection port 24.

The accommodation space 37 accommodates the inner part 31.

The fluid path 38 communicates the accommodation space 37 and the injection port 24.

The inner part 31, also called a fluid path part, has a supply face 21, a peripheral wall 32, a bottom wall 33, an upstream path 26, a fluid path 34, and partition walls 29.

The supply face 21 has a supply port 22.

By fitting the inner part 31 into the accommodation space 37 of the outer part 36, the fluid paths 34 and 38 are linked to form a downstream path 27.

Pressure of fluid supplied to the supply port 22 pushes the inner part 31 toward a downstream direction. This prevents the inner part 31 from removal from the outer part 36.

The outer part 36 can be common to other fluid devices with different fluid circuits. This enables reduction of manufacturing cost.

### Example not being part of the invention

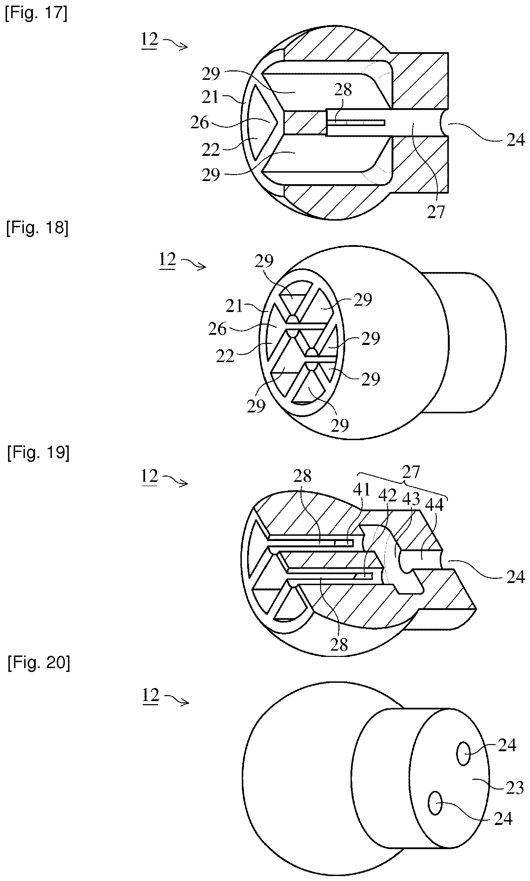

FIGS. 16 and 17 illustrate a fluid device 12 for use in a nozzle 10 shown in FIG. 1 or the like.

The fluid device 12 is similar to, but different in the following points from, Embodiment 1.

The partition walls 29 intersect at a center of an upstream side.

The supply port 22 is divided by the partition walls 29 into four peripheral areas. No central area exists.

The downstream path 27 does not communicate the supply port 22.

Fluid is supplied to the supply port 22. All of the fluid enters the upstream path 26 through the peripheral areas, passes through the connection ports 28 to enter the downstream path 27, and is injected outward from the injection port 24.

The partition walls 29 linked at the center of the upstream side enables to prevent deformation of the partition walls 29 by the pressure of the fluid which causes change of the widths of the connection port 28.

### <Embodiment 3>

FIGS. 18 and 19 illustrate a fluid device 12 for use in a nozzle 10 shown in FIG. 1 or the like.

The fluid device 12 is similar to, but different in the following points from, Embodiment 1.

A supply port 22 is divided by a partition walls 29 into eight areas. Two of them are central areas, and the other six are peripheral areas. Each of the central areas are linked to four of the peripheral areas. Two of the peripheral areas are linked to the both central areas.

A downstream path 27 has two fluid path 41 and 42, a merging chamber 43, and injection path 44. Each of the fluid paths 41 and 42 is a hole with a roughly constant thickness, and communicates the central area of the supply port 22 and the merging chamber 43. The injection path 44 communicates the merging chamber 43 and an injection port 24.

An upstream path 26 is divided by the partition walls 29 into six fluid paths. Each of the fluid paths is connected via the connection port 28 to at least one of the fluid paths 41 and 42.

Fluid is supplied to the supply port 22, enters the fluid path 41 or 42 directly through the central areas, or enters the upstream path 26 through the peripheral areas and then enters the fluid path 41 or 42 through the connection port 28. The fluid entering the fluid paths 41 and 42 is merged in the merging chamber 43, passes through the injection path 44, and is injected outward from the injection port 24.

It should be unlikely that the fluid path 41 or 42 is blocked and fluid is unable to pass through it. Even if the event occurs, fluid can pass through the other of the fluid paths 41 and 42. This enables to prevent loss of capability to inject fluid.

### <Embodiment 4>

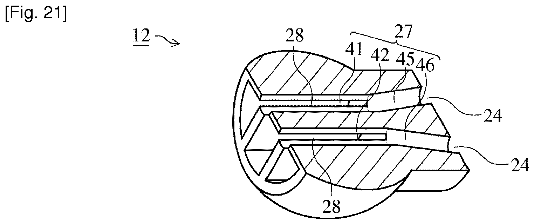

FIGS. 20 and 21 illustrate a fluid device 12 for use in a nozzle 10 shown in FIG. 1 or the like.

The fluid device 12 is similar to, but different in the following points from, Embodiment 4.

An injection face 23 has two injection ports 24.

A downstream path 27 has no merging chamber 43, and two injection paths 45 and 46. The injection path 45 communicates a fluid path 41 and one of the injection port 24. The injection path 46 communicates a fluid path 42 and the other of the injection port 24. The two injection ports 24 inject fluid toward different directions.

Fluid is supplied to the supply port 22, enters the fluid path 41 or 42 directly through central areas, or enters an upstream path 26 through peripheral areas and then enters the fluid paths 41 or 42 through connection ports 28. The fluid entering the fluid path 41 passes through the injection path 45, and is injected outward from the injection port 24. The fluid entering the fluid path 42 passes through the injection path 46, and is injected outward from the injection port 24.

The fluid passing through the two injection paths 45 and 46 are injected toward the different directions. The fluid device 12 alone can inject fluid within a broad range.

The above described embodiments are examples to make it easier to understand the present invention. The present invention is not limited to the examples, and includes any modified, altered, added, or removed variations, without departing from the scope of the claims attached herewith. This can be easily understood by persons skilled in the art.

For example, the fluid device 12 described in Embodiments 3 to 4 may be modified in the manner described in Embodiment 2 so as to be formed by two parts.

The fluid device 12 described in Embodiment 1 may be modified to provide a ring wall surrounding the central area of the supply port 22 so that the partition walls 29 are connected and linked to the ring wall.

The fluid device 12 described in Embodiments 1 to 3 may be modified to provide a plurality of the injection paths for injecting fluid toward different directions.

The plurality of fluid paths of the upstream path 26 may be defined in any other manners, instead of dividing by the partition walls 29.

The number of fluid paths of the upstream path 26 may be five or more, two or three, or only one.

The upstream path 26 may not surround the downstream path 27.

A injection type of fluid injected from the injection port 24 may be a jet type shown in FIG. 2, a diffusion type shown in FIG. 3, or any other type.

### REFERENCE SIGNS LIST

10: nozzle; 11: body; 12: fluid device; 13: head section; 14: neck section; 21: supply face; 22: supply port; 23: injection face; 24: injection port; 25, 34, 38, 41 and 42: fluid path; 26: upstream path; 27: downstream path; 28: connection port; 29: partition wall; 31: inner part; 32: peripheral wall; 33: bottom wall; 36: outer part; 37: accommodation space; 43: merging chamber; and, 44 and 45: injection path.

## Claims

1. A fluid device (12), comprising:
an upstream path (26);
a downstream path (27);
a supply face (21) at an upstream side; and
an injection face (23) at a downstream side, wherein
the upstream path (26) is a hole with a constant thickness connected via a plurality of connection ports (28) to the downstream path (27), and configured to supply fluid from the upstream path (26) through the connection ports (28) to the downstream path (27),
each of the connection ports (28) has a slit shape extending along a flowing direction of the fluid, and has a width narrower than a diameter of the downstream path,
the upstream path (26) has a plurality of fluid paths,
the plurality of fluid paths are connected via respective connection ports (28) to the downstream path (27),
the upstream path (26) surrounds an upstream side part of the downstream path (27),
the plurality of fluid paths are defined by separating the upstream path (26) with a plurality of partition walls (29), and
the plurality of partition walls (29) extend along the flowing direction of the fluid, and extend radially around the downstream path (27),
each of the plurality of fluid paths allows a foreign object which chokes the connection port (28) to intrude thereinto and to be piled at the connection port,
the supply face (21) has a supply port (22) for receiving a supply of fluid,
the upstream path (26) is connected to the supply port (22) at the upstream side for receiving the fluid through the supply port (22),
the supply port (22) is divided by the plurality of partition walls (29) into a central area and a plurality of peripheral areas broader than the central area, the central area being linked to the peripheral areas, and
the supply port (22) is configured such that a part of the fluid supplied to the supply port enters the downstream path (27) directly through the central area and the rest of the fluid supplied to the supply port (22) enters the upstream path (26) through the plurality of peripheral areas,
the injection face (23) has an injection port (24) for injecting fluid outward,
the downstream path (27) is a hole with a constant thickness communicating the central area and the injection port.

2. The fluid device (12) of Claim 1, wherein
the connection port (28) is a gap between the plurality of the partition walls (29).

3. The fluid device (12) of Claim 1 or 2, wherein
the upstream path (26) has a first, a second, and a third fluid paths,
the downstream path (27) has a first and a second fluid paths,
the first fluid path of the upstream path (26) is connected via a first connection port (28) to the first fluid path of the downstream path (27),
the second fluid path of the upstream path (26) is connected via a second connection port (28) to the second fluid path of the downstream path (27),
the third fluid path of the upstream path (26) is connected via a third connection port (28) to the first fluid path of the downstream path (27), and connected via a fourth connection port (28) to the second fluid path of the downstream path (27).

4. The fluid device (12) of Claim 3, wherein
the first fluid path of the downstream path (27) injects the supplied fluid toward a first direction, and
the second fluid path of the downstream path (27) injects the supplied fluid toward a second direction different from the first direction.

5. A nozzle (10), comprising:
a fluid device (12) of anyone of Claims 1 to 4; and
a body (11),
wherein the body (11) has an accommodation section fitted with the fluid device (12).

## Patentansprüche

1. Fluidvorrichtung (12), aufweisend:
einen stromaufwärtigen Pfad (26);
einen stromabwärtigen Pfad (27);
eine Zuführfläche (21) auf einer stromaufwärtigen Seite; und
eine Einspritzfläche (23) auf einer stromabwärtigen Seite; wobei
der stromaufwärtige Pfad (26) eine Bohrung mit einer konstanten Dicke ist, die über mehrere Verbindungsanschlüsse (28) mit dem stromabwärtigen Pfad (27) verbunden und zum Zuführen von Fluid aus dem stromaufwärtigen Pfad (26) durch die Verbindungsanschlüsse (28) zum stromabwärtigen Pfad (27) ausgebildet ist,
jeder der Verbindungsanschlüsse (28) eine Schlitzform aufweist, die sich in einer Fließrichtung des Fluids erstreckt,
und eine Breite aufweist, die schmaler als ein Durchmesser des stromabwärtigen Pfades ist,
der stromaufwärtige Pfad (26) mehrere Fluidpfade aufweist,
die mehreren Fluidpfade über entsprechende Verbindungsanschlüsse (28) mit dem stromabwärtigen Pfad (27) verbunden sind,
der stromaufwärtige Pfad (26) einen stromaufwärtsseitigen Teil des stromabwärtigen Pfades (27) umgibt,
die mehreren Fluidpfade durch Unterteilen des stromaufwärtigen Pfades (26) mit mehreren Trennwänden (29) definiert sind und
die mehreren Trennwände (29) in Fließrichtung des Fluids sowie radial um den stromabwärtigen Pfad (27) verlaufen,
jeder der mehreren Fluidpfade das Eindringen eines Fremdkörpers zulässt, der den Verbindungsanschluss (28) drosselt und sich am Verbindungsanschluss anhäuft,
wobei die Zuführfläche (21) einen Zuführanschluss (22) zum Aufnehmen eines Fluidvorrats aufweist,
der stromaufwärtige Pfad (26) an der stromaufwärtigen Seite mit dem Zuführanschluss (22) verbunden ist, um Fluid durch den Zuführanschluss (22) aufzunehmen,
der Zuführanschluss (22) durch die mehreren Trennwände (29) in einen zentralen Bereich und mehrere Randbereiche, die breiter als der zentrale Bereich sind, unterteilt ist, wobei der zentrale Bereich mit den Randbereichen gekoppelt ist, und
der Zuführanschluss (22) so ausgebildet ist, dass ein Teil des dem Zuführanschluss zugeführten Fluids direkt durch den zentralen Bereich in den stromabwärtigen Pfad (27) eintritt und der Rest des dem Zuführanschluss (22) zugeführten Fluids durch die mehreren Randbereiche in den stromaufwärtigen Pfad (26) eintritt,
die Einspritzfläche (23) einen Einspritzanschluss (24) zum Einspritzen von Fluid nach außen aufweist,
der stromabwärtige Pfad (27) eine Bohrung mit einer konstanten Dicke ist, die mit dem zentralen Bereich und dem Einspritzanschluss kommuniziert.

2. Fluidvorrichtung (12) nach Anspruch 1, wobei
der Verbindungsanschluss (28) ein Spalt zwischen den mehreren Trennwänden (29) ist.

3. Fluidvorrichtung (12) nach Anspruch 1 oder 2, wobei
der stromaufwärtige Pfad (26) einen ersten, einen zweiten und einen dritten Fluidpfad aufweist,
der stromabwärtige Pfad (27) einen ersten und einen zweiten Fluidpfad aufweist,
der erste Fluidpfad des stromaufwärtigen Pfades (26) über einen ersten Verbindungsanschluss (28) mit dem ersten Fluidpfad des stromabwärtigen Pfades (27) verbunden ist,
der zweite Fluidpfad des stromaufwärtigen Pfades (26) über einen zweiten Verbindungsanschluss (28) mit dem zweiten Fluidpfad des stromabwärtigen Pfades (27) verbunden ist,
der dritte Fluidpfad des stromaufwärtigen Pfades (26) über einen dritten Verbindungsanschluss (28) mit dem ersten Fluidpfad des stromabwärtigen Pfades (27) und über einen vierten Verbindungsanschluss (28) mit dem zweiten Fluidpfad des stromabwärtigen Pfades (27) verbunden ist.

4. Fluidvorrichtung (12) nach Anspruch 3, wobei
der erste Fluidpfad des stromabwärtigen Pfades (27) das zugeführte Fluid in eine erste Richtung einspritzt und
der zweite Fluidpfad des stromabwärtigen Pfades (27) das zugeführte Fluid in eine von der ersten Richtung verschiedene zweite Richtung einspritzt.

5. Düse (10), aufweisend:
eine Fluidvorrichtung (12) nach einem der Ansprüche 1 bis 4; und
einen Körper (11),
wobei der Körper (11) einen mit der Fluidvorrichtung (12) ausgestatteten Aufnahmeabschnitt aufweist.

## Revendications

1. Dispositif pour fluide (12), comprenant :
une trajectoire amont (26) ;
une trajectoire avale (27) ;
une face d'introduction (21) sur un côté amont ; et
une face d'injection (23) sur un côté aval, où
la trajectoire amont (26) est une perforation avec une épaisseur constante connectée via plusieurs orifices de connexion (28) à la trajectoire avale (27), et configurée pour introduire du fluide à partir de la trajectoire amont (26) par les orifices de connexion (28) dans la trajectoire avale (27),
chacun des orifices de connexion (28) présente une forme de fente s'étendant le long d'une direction d'écoulement du fluide, et présente une largeur plus étroite qu'un diamètre de la trajectoire avale,
la trajectoire amont (26) présente plusieurs trajectoires de fluide,
les plusieurs trajectoires de fluide sont connectées via des orifices de connexion respectifs (28) à la trajectoire avale (27),
la trajectoire amont (26) entoure une partie latérale amont de la trajectoire avale (27),
les plusieurs trajectoires de fluide sont définies en séparant la trajectoire amont (26) avec plusieurs parois de partition (29), et
les plusieurs parois de partition (29) s'étendent le long de la direction d'écoulement du fluide, et s'étendent radialement autour de la trajectoire avale (27),
chacune des plusieurs trajectoires de fluide laisse un objet étranger qui obstrue l'orifice de connexion (28) s'imposer dans celui-ci et être empilé à l'orifice de connexion,
la face d'introduction (21) présente un orifice d'introduction (22) pour recevoir une introduction de fluide,
la trajectoire amont (26) est connectée à l'orifice d'introduction (22) sur le côté amont pour recevoir le fluide par l'orifice d'introduction (22),
l'orifice d'introduction (22) est divisé par les plusieurs parois de partition (29) dans une surface centrale et plusieurs surfaces périphériques plus larges que la surface centrale, la surface centrale étant liée aux surfaces périphériques, et
l'orifice d'introduction (22) est configuré de sorte qu'une partie du fluide introduit dans l'orifice d'introduction entre dans la trajectoire avale (27) directement par la surface centrale et le reste du fluide introduit dans l'orifice d'introduction (22) entre dans la trajectoire amont (26) par les plusieurs surfaces périphériques,
la face d'injection (23) présente un orifice d'injection (24) pour injecter du fluide à l'extérieur,
la trajectoire avale (27) est une perforation avec une épaisseur constante faisant communiquer la surface centrale et l'orifice d'injection.

2. Dispositif pour fluide (12) selon la revendication 1, où
l'orifice de connexion (28) est un espace entre les plusieurs parois de partition (29).

3. Dispositif pour fluide (12) selon la revendication 1 ou 2, où
la trajectoire amont (26) présente une première, une deuxième et une troisième trajectoires de fluide,
la trajectoire avale (27) présente une première et une deuxième trajectoires de fluide,
la première trajectoire de fluide de la trajectoire amont (26) est connectée via un premier orifice de connexion (28) à la première trajectoire de fluide de la trajectoire avale (27),
la deuxième trajectoire de fluide de la trajectoire amont (26) est connectée via un deuxième orifice de connexion (28) à la deuxième trajectoire de fluide de la trajectoire avale (27),
la troisième trajectoire de fluide de la trajectoire amont (26) est connectée via un troisième orifice de connexion (28) à la première trajectoire de fluide de la trajectoire avale (27), et connectée via un quatrième orifice de connexion (28) à la deuxième trajectoire de fluide de la trajectoire avale (27).

4. Dispositif pour fluide (12) selon la revendication 3, où
la première trajectoire de fluide de la trajectoire avale (27) injecte le fluide introduit vers une première direction, et
la deuxième trajectoire de fluide de la trajectoire avale (27) injecte le fluide introduit vers une deuxième direction différente de la première direction.

5. Buse (10), comprenant :
un dispositif pour fluide (12) selon l'une quelconque des revendications 1 à 4 ; et
un corps (11),
où le corps (11) présente une section d'accommodation adaptée au dispositif pour fluide (12).
